(19) Europäisches Patentamt
European Patent Office
Office européen des brevets

(11) Publication number : **0 354 511 B1**

(12) **EUROPEAN PATENT SPECIFICATION**

(45) Date of publication of patent specification : **09.12.92 Bulletin 92/50**

(51) Int. Cl.$^5$ : **C08J 9/00,** B01F 17/00, // (C08L83/12, 75:04, 71:02)

(21) Application number : **89114558.3**

(22) Date of filing : **07.08.89**

(54) **Flexible polyurethane foam composition.**

(30) Priority : **08.08.88 US 229578**

(43) Date of publication of application : **14.02.90 Bulletin 90/07**

(45) Publication of the grant of the patent : **09.12.92 Bulletin 92/50**

(84) Designated Contracting States : **DE FR GB**

(56) References cited :
**EP-A- 0 020 025**
**US-A- 3 489 698**
**US-A- 4 371 686**
**US-A- 4 379 105**

(73) Proprietor : **DOW CORNING CORPORATION**
**P.O. Box 1767**
**Midland Michigan 48686-0994 (US)**

(72) Inventor : **Owen, Michael James**
**1505 W. St. Andrews**
**Midland Michigan (US)**
Inventor : **Snow, Steven Ashley**
**1511 Sylvan Lane**
**Midland Michigan (US)**

(74) Representative : **Spott, Gottfried, Dr. et al**
**Patentanwälte Spott und Puschmann**
**Sendlinger-Tor-Platz 11**
**W-8000 München 2 (DE)**

**EP 0 354 511 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention is concerned with a new compposition for flexible foams. These flexible foams are then processed in a conventional manner.

The invention provides advantages over the use of a single surfactant, such as the silicone glycol copolymer type, in that the present mixture provides polyurethane foams with high air flow values over a wide range of ingredient amounts. Furthermore, the surfactant mixture of the invention is less costly to use than the silicone glycol copolymer surfactant alone.

US-A 3 489 698 discloses an emulsion of an incompatible polyols mixture of a low molecular weight polyol and a high molecular weight polyol and an emulsifier wherein the emulsifier is an ethylene oxide/propylene oxide block copolymer. In addition to this emulsifier there can be present a siloxane oxide alkylene block copolymer of the type $(AB)_n$, i.e. wherein the polysiloxane moieties are bonded to polyoxyalkylene moieties. The air flow of polyurethane foams obtained by curing the composition of US-A 3 489 698 is not satisfying.

The invention comprises a conventional mixture of flexible polyurethane foam components and a surfactant mixture. The surfactant mixture itself comprises:

(i) a predetermined amount of a block copolymer with segments of polyoxypropylene and polyoxyethylene; and

(ii) a predetermined amount of a silicone glycol copolymer.

The composition of the invention is incorporated in a predetermined amount to the reaction mixture of a conventional polyurethane foam forming composition to act as the surfactant thereof. Processing of the polyurethane foam forming composition is conducted in a conventional manner to thereby form a high air flow flexible foam.

The composition of the invention is a reaction mixture comprising the conventional flexible polyurethane foam forming components: diisocyanate; polyol; water; gas generating catalyst; polymerization catalyst and:

a surfactant mixture wherein the surfactant mixture comprises

(i) an (A)-(B)-(A) block copolymer, wherein the (A) segment is polyoxyethylene and the (B) segment is polyoxypropylene, with the (B) segment having a molecular weight ranging from 1,000-5,000, wherein the (A) segments comprise from 5-80 wt. percent of the total weight of said block copolymer and the (B) segment comprises from 95-20 wt. percent of the total weight of said block copolymer, and

(ii) a silicone glycol copolymer surfactant of the general formula:

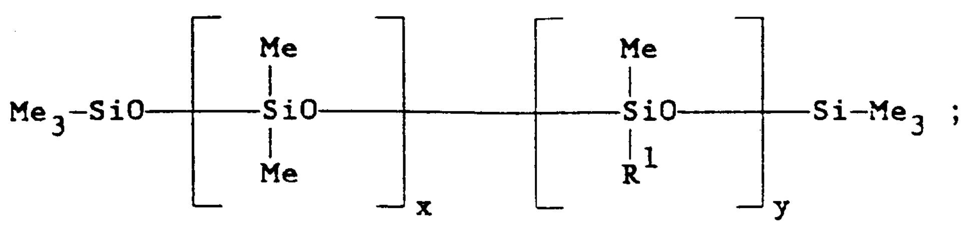

wherein Me represents methyl, $R^1$ is a member selected from the group consisting of:

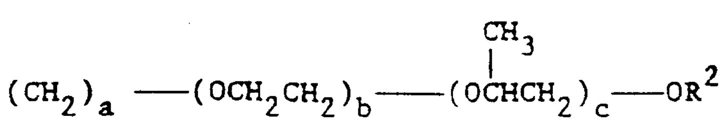

and

$(CH_2)_a—(OCH_2CH_2)_b—OR^2$;

$R^2$ represents:

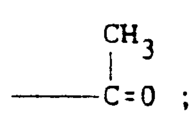

and

$\underline{x}$ ranges from 80 - 250; y ranges from 10 - 40;

a ranges from 2 - 10; b ranges from 1 - 30; and
c ranges from 1 - 30, the ratio of (i) to (ii) ranges from 1:2 to 2:1,
said surfactant mixture being present in said polyurethane foam composition in an amount such that 0.4 - 1.2 parts silicone glycol copolymer surfactant are present per hundred parts of said polyurethane foam composition.

The block copolymer (i) of the invention is an (A)-(B)-(A) type of block copolymer in which (A) represents a polyoxyethylene segment and (B) represents a polyoxypropylene segment. Together, the polyoxyethylene(A) segments comprise from about 5 - 80 wt. percent of the total copolymer, with a range of from about 10 - 70 wt. percent being preferred and 10 - 30 wt. percent being most preferred. The polyoxypropylene (B) segment comprises from 95 - 20 wt. percent of the total polymer, with a range of from 90 -30 wt. percent being preferred and 90 - 70 wt. percent being most preferred. The polyoxypropylene segment is further defined as having a molecular weight ranging from 1,000 - 5,000, or preferably, a molecular weight ranging from 1,500 - 4,000.

The polyoxypropylene and polyoxyethylene block copolymer of the invention is commercially available from BASF Corporation, Parsippany, New Jersey, under the tradename PLURONIC®. The block copolymer of polyoxypropylene and polyoxyethylene is obtainable from BASF in numerous formulations, wherein the molecular weight of the polyoxypropylene and the wt. percent of the polyoxyethylene components are varied with each formulation. Several suitable formulations of PLURONIC® block copolymers of polyoxypropylene and polyoxyethylene are available under the BASF designations:

TABLE 1

| BASF designation | MW PPO* | % PEO** |
|---|---|---|
| PLURONIC F-108 | 3250 | 80 |
| PLURONIC P-104 | 3250 | 40 |
| PLURONIC L-101 | 3250 | 10 |
| PLURONIC F-88 | 2250 | 80 |
| PLURONIC P-84 | 2250 | 40 |
| PLURONIC L-81 | 2250 | 10 |
| PLURONIC F-68 | 1750 | 80 |
| PLURONIC L-64 | 1750 | 40 |
| PLURONIC L-61 | 1750 | 10 |

*MW PPO = molecular weight of polyoxypropylene

**% PEO = weight percent of copolymer which is polyoxyethylene

The silicone glycol copolymer surfactant of the invention is represented by the general formula:

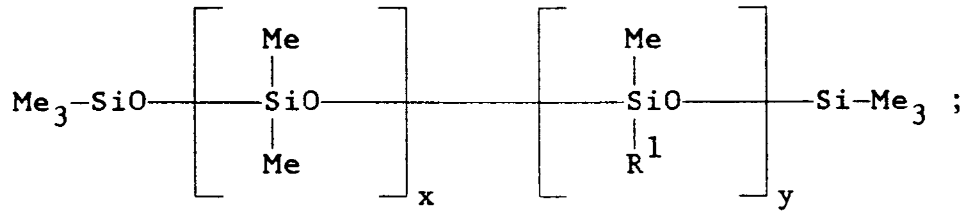

wherein $R^1$ is selected from the group consisting of:

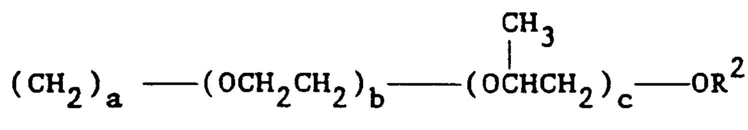

and

$(CH_2)_a—(OCH_2CH_2)_b—OR^2$;

and

$R^2$ represents:

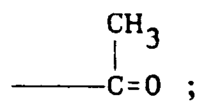

and

x ranges from 80 - 250, preferably from 130 - 170; y ranges from 10 - 40, preferably from 15 - 25; a ranges from 2 - 10 and is preferably 3; b ranges from 1 - 30, preferably 15 - 20; and c ranges from 1 - 30, preferably 1 - 20.

The surfactant mixture of the invention is formulated so that the ratio of the block copolymer to the silicone glycol copolymer surfactant ranges from 1:2 to 2:1. The amount of the surfactant mixture added to the foam forming composition is based on the amount of silicone glycol copolymer surfactant present per hundred parts of the polyurethane foam forming composition, so that from 0.4 - 12 parts silicone glycol copolymer surfactant are present per hundred parts foam forming composition, or preferably, from 0.5 - 1 parts silicone glycol copolymer surfactant are present per hundred parts foam forming composition when the polyurethane foam is formed.

The preferred diisocyanate used in the invention is toluene diisocyanate, although other diisocyanates can be used. The preferred polyol used in the invention is a polyoxypropylene polyol, (usually a triol), although other lower alkylene (C1 - C6) polyoxyalkylene polyols can be used. The preferred gas generating or foaming catalysts of the invention include tertiary amines, such as trimethylamine. The preferred polymerization catalysts are organo-tin catalysts, such as stannous octoate. The foam forming ingredients are processed in a conventional manner, such as the "one-shot" process, in order to form a foam thereby. Such a process comprises combining the components of the reaction mixture, the catalysts, the surfactant mixture and stirring until homogenous. The isocyanate is then added under stirring. Stirring is discontinued when foam formation occurs.

The foams formed by the composition of the invention are further defined as having air flow values as defind by a Foam Porosity Air Flow Test in the ranges of from 0.15 - 0.24 $m^3$/min (5.5 - 8.5 cubic feet per minute), and more preferably, from 0.17 - 0.23 $m^3$/min (6.0 - 8.0 cubic feet per minute).

Numerous examples of the formulation of the invention were prepared in quart-sized cups to produce samples of polyurethane foam for testing. A Foam Porosity Air Flow Test was conducted on the prepared samples of the flexible urethane foam. The porosity testing comprised cutting a right angled block from the prepared foam sample, the block having the dimensions: 2.54 cm by 5.08 cm by 5.08 cm (1″ by 2″ by 2″). The foam block was placed in the testing chamber of the Foam Porosity Air Flow Test instrument. A vacuum drawn on one 5.08 cm x 5.08 cm (2″ x 2″)side of the block induced the flow of air from the opposite 5.08 cm x 5.08 cm (2″ x 2″) block side, axially through the foam along the 2.54 cm (1″) axis of the block. Instruments measured and recorded the resultant air flow. Results of the Foam Porosity Air Flow Test are reported below in Table 2.

Also reported in Table 2 are the heights of each foam sample produced by the reaction mixtures and the results of a subjective examination of each sample for foam quality.

Control runs X and Y were conducted wherein designated amounts of the silicone surfactant were added to the foam forming composition with no block copolymer surfactant being present.

TABLE 2

| A-B-A COPOLYMER TYPE | MW PPO | %PEO | A-B-A: SILICONE RATIO | FOAM HEIGHT (inches) | AIR FLOW (cuft/m) m³/m | FOAM QUAL | FOAM HEIGHT (cm) |
|---|---|---|---|---|---|---|---|
| P-84 | 2250 | 40 | 1:1 | 8 13/16 | (8.0)0,23 | good | 22,38 |
| F-108 | 3250 | 80 | 1:1 | 8 10/16 | (6.2)0,18 | t.bl | 21,91 |
| L-101 | 3250 | 10 | 1:1 | 8 15/16 | (7.9)0,22 | good | 22,70 |
| F-68 | 1750 | 80 | 1:1 | 7 13/16 | N/A | t.bl | 19,84 |
| L-61 | 1750 | 10 | 1:1 | 8 12/16 | (7.2)0,20 | good | 22,22 |
| F-88 | 2250 | 80 | 2:1 | 7 4/16 | N/A | voids | 18,34 |
| L-81 | 2250 | 10 | 2:1 | 8 14/16 | (7.4)0,21 | good | 22,54 |
| P-84 | 2250 | 40 | 1:1 | 8 11/16 | (7.2)0,20 | s.bk | 22,07 |
| F-88 | 2250 | 80 | 1:2 | 9 1/16 | (7.3)0,21 | s.spl | 23,02 |
| L-81 | 2250 | 10 | 1:2 | 8 14/16 | (7.1)0,20 | good | 22,54 |
| P-104 | 3250 | 40 | 2:1 | 8 15/16 | (7.5)0,21 | good | 22,70 |
| L-64 | 1750 | 40 | 2:1 | 8 11/16 | (6.2)0,18 | spl | 22,07 |
| P-104 | 3250 | 40 | 1:2 | 8 15/16 | (7.7)0,22 | good | 22,70 |
| L-64 | 1750 | 40 | 1:2 | 9 1/16 | (7.5)0,21 | good | 23,02 |
| P-84 | 2250 | 40 | 1:1 | 8 12/16 | (7.2)0,20 | good | 22,22 |
| CONTROL X - silicone surfactant at .5 parts per hundred parts foam forming composition (no copolymer) | | | | 8 12/16 | (7.0)0,20 | good | 22,22 |
| CONTROL Y - silicone surfactant at .8 parts per hundred parts foam forming composition (no copolymer) | | | | 9 2/16 | (6.4)0,18 | good | 23,18 |

In Table 2, the legend "A-B-A COPOLYMER TYPE" refers to the BASF designation given to the various forms of PLURONIC brand copolymer used in the experiments. "MW PPO" refers to the molecular weight of the polyoxypropylene segment of the PLURONIC® brand copolymer and %PEO refers to the weight percent of polyoxyethylene in the PLURONIC® brand copolymer used. "A-B-A: SILICONE RATIO" is the weight ratio of PLURONIC® brand copolymer to the silicone glycol copolymer surfactant used in the surfactant mixtures. The legend "cuft/m" stands for cubic feet of air flow per minute. Entries under "FOAM QUAL" are the results of the subjective analysis of the various foams produced in the experiments. The abbreviation "t.bl" indicates the foam sample showed signs of top blow, a small crater-like deformity on the top surface of the foam sample; "s.bk" refers to the "settleback" phenomenon or minor collapse of the foam after it reaches a maximum height; "spl" refers to the top of the foam sample splitting, "s.spl" refers to a small split on the top of the foam sample.

## Claims

1. Flexible polyurethane foam composition comprising diisocyanate, polyol, water, gas generating catalyst, polymerization catalyst, and a surfactant mixture wherein the surfactant mixture comprises

   (i) an (A)-(B)-(A) block copolymer, wherein the (A) segment is polyoxyethylene and the (B) segment is polyoxypropylene, with the (B) segment having a molecular weight ranging from 1,000-5,000, wherein the (A) segments comprise from 5-80 wt. percent of the total weight of said block copolymer and the (B) segment comprises from 95-20 wt. percent of the total weight of said block copolymer, and

   (ii) a silicone glycol copolymer surfactant of the general formula:

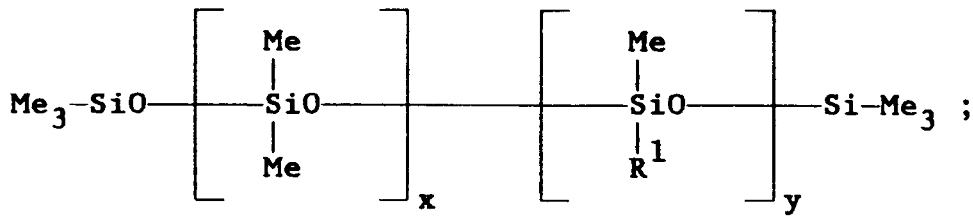

   wherein Me represents methyl, $R^1$ is a member selected from the group consisting of:

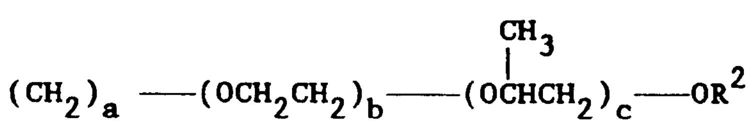

   and

   $(CH_2)_a—(OCH_2CH_2)_b—OR^2$;

   $R^2$ represents:

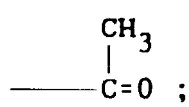

   and

   x ranges from 80 - 250; y ranges from 10 - 40;
   a ranges from 2 - 10; b ranges from 1 - 30; and
   c ranges from 1 - 30, the ratio of (i) to (ii) ranges from 1:2 to 2:1,

   said surfactant mixture being present in said polyurethane foam composition in an amount such that 0.4 - 1.2 parts silicone glycol copolymer surfactant are present per hundred parts of said polyurethane foam composition.

## Patentansprüche

1. Flexible Polyurethanschaumzusammensetzung umfassend die Diisocyanat, Polyol, Wasser, einen ein Gas erzeugenden Katalysator, einen Polymerisationskatalysator und eine Tensid-Mischung, worin die Tensid-Mischung umfaßt

   (i) ein (A)-(B)-(A)-Blockcopolymer, worin das (A)-Segment Polyoxyethylen ist und das (B)-Segment Polyoxypropylen ist, wobei das (B)-Segment ein Molekulargewicht im Bereich von 1000 bis 5000 hat, wobei die (A)-Segmente 5 bis 80 Gew.-% des Gesamtgewichts des Blockcopolymers ausmachen und das (B)-Segment 95 bis 20 Gew.-% des Gesamtgewichts des Blockcopolymers ausmachen und

   (ii) ein Siliconglycolcopolymertensid der allgemeinen Formel:

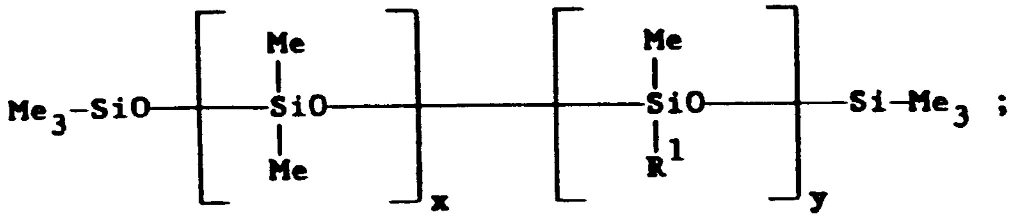

worin Me einen Methylrest darstellt, $R^1$ ein Mitglied ausgewählt aus der Gruppe bestehend aus:

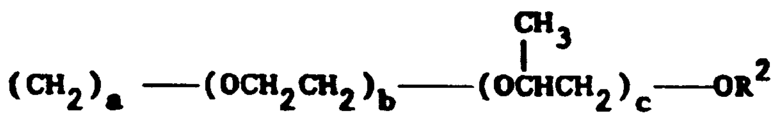

und

$(CH_2)_a—(OCH_2CH_2)_b—OR^2$

ist,

$R^2$

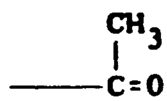

ist; und

x im Bereich von 80 bis 250 liegt; y im Bereich von 10 bis 40 liegt; a im Bereich von 2 bis 10 liegt; b im Bereich von 1 bis 30 liegt und c im Bereich von 1 bis 30 liegt, wobei das Verhältnis von (i) zu (ii) im Bereich von 1:2 bis 2:1 liegt,

wobei die Tensid-Mischung in der Polyurethanschaumzusammensetzung in einer solchen Menge vorhanden ist, daß 0,4 bis 1,2 Teile Siliconglycolcopolymertensid pro 100 Teile der Polyurethanschaumzusammensetzung vorhanden sind.

## Revendications

1. Composition de mousse de polyuréthanne souple comprenant un diisocyanate, un polyol, de l'eau, un catalyseur engendrant un gaz, un catalyseur de polymérisation et un mélange d'agents tensio-actifs, dans laquelle le mélange d'agents tensio-actifs comprend

(i) un copolymère séquencé (A)-(B)-(A) où le segment (A) est du polyoxyéthylène et le segment (B) est du polyoxypropylène, le segment (B) ayant un poids moléculaire compris entre 1000 et 5000, dans lequel les segments (A) constituent 5 à 80 pour cent en poids du poids total dudit copolymère séquencé et le segment (B) constitue 95 à 20 pour cent en poids du poids total dudit copolymère séquencé, et

(ii) un copolymère silicone-glycol tensio-actif de la formule générale :

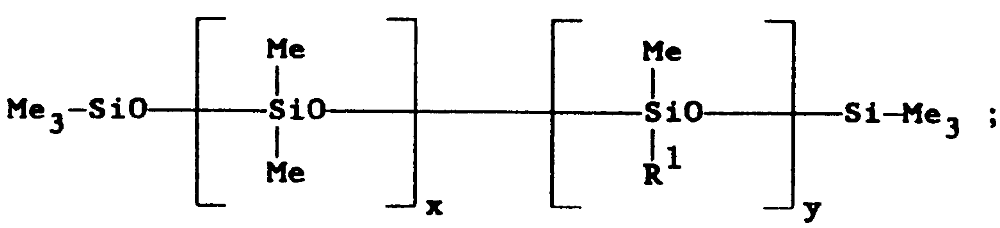

où Me représente le radical méthyle, $R^1$ est un membre du groupe formé par :

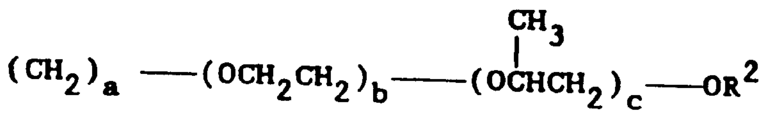

et

$$(CH_2)_a—(OCH_2CH_2)_b—OR^2;$$

$R^2$ représente :

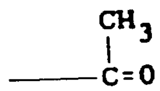 ;

et

x est de 80 à 250 ; y est de 10 à 40 ; a est de 2 à 10 ; b est de 1 à 30 ; et c est de 1 à 30, le rapport de (i) à (ii) étant compris entre 1:2 et 2:1,

ledit mélange d'agents tensio-actifs étant présent dans ladite composition de mousse de polyuréthanne en une quantité telle que 0,4 à 1,2 partie du copolymère silicone-glycol tensio-actif soit présente pour cent parties de ladite composition de mousse de polyuréthanne.